# EUROPEAN PATENT SPECIFICATION

(11) **EP 1 234 505 B1**
(45) Date of publication and mention of the grant of the patent: **17.05.2006**
(21) Application number: 02250429.4
(22) Date of filing: 22.01.2002
(51) Int. Cl.: A21D 13/00, A21D 13/08, A21D 15/02, A21D 15/08

(54) **Filled crepe products and the process for their preparation**
Gefüllter Pfannekuchen und Herstellungsverfahren
Crêpe fourrée et son procédé de fabrication

(30) Priority: 22.02.2001 EP 01301633
(43) Date of publication of application: 28.08.2002
(73) Proprietor: UNILEVER PLC, London EC4P 4BQ (GB); UNILEVER N.V., 3013 AL Rotterdam (NL)
(72) Inventor: Panaioli, Sandro, c/o Sagit SpA., Unilever Italia, 04012 Cisterna di Latina (LT) (IT); Simeone, Valerio, c/o Sagit SpA, Unilever Italia, 04012 Cisterna di Latina (LT) (IT)
(74) Representative: Acham, Nicholas Clive

(56) References cited:
- EP-A- 0 453 586
- FR-A- 2 662 054
- FR-A- 2 774 864
- GB-A- 2 168 233
- GB-A- 2 248 541
- US-A- 5 069 921
- PATENT ABSTRACTS OF JAPAN vol. 2000, no. 15, 6 April 2001 (2001-04-06) & JP 2000 342164 A (SUZUKI SHIYOKO), 12 December 2000 (2000-12-12)

## Description

### Field of the invention

The present invention relates to a food product and a process for the preparation thereof. In particular the present invention relates to folded crepe products which contain a sauce component.

### Background to the invention

Filled folded crepe products are known in the art and widely available to the consumer as ready prepared frozen food products. These products provide a popular meal and their short preparation time lends them well to the ever increasing demand for convenient in-home food.

Filled crepes of the prior art are simple products comprising an outer crepe layer which is folded and sealed to enclose an internal volume containing a sauce as described in GB2248541 (Billcrest Products Ltd). Selecting different recipes for the sauce component has given rise to some inter-product variation in the eating experience for the consumer, however it has not been possible to provide variation in taste and texture within a single product. The filled crepe products known in the art give minimal variation in texture on eating and the sauce component is rendered uniform when the product is re-heated for consumption.

GB 2 248 541 (Billcrest Products) discloses a process for the manufacture of a filled pancake-like envelope.

FR 2 662 054 (Rolande valin) discloses a process for the manufacture of a pizza using a crepe base and products obtainable thereby.

The applicants have identified the need to add further diversity to filled crepe products. In particular the applicants have identified the need to introduce novel organoleptic properties, such as contrasting taste and texture combinations within a single filled crepe, wherein such contrasts are maintained in the product when re-heated for consumption.

The technical problem to be solved by the present invention therefore concerns the need to provide filled crepe products which individually comprise novel and exciting combinations of different sauce flavours, textures and appearance, wherein said differences are maintained in the product on re-heating for consumption.

It has been found, by way of the present invention, that the solution to this problem resides in incorporating a plurality of different sauces within a single folded crepe, wherein the contrast of differing sauce properties is maintained during re-heating by their separation by one or more edible barrier layers. In this way the consumer benefits from a more appetising and interesting eating experience.

### Summary of the invention.

It is a first object of the present invention to provide a frozen food product comprising a crepe, wherein said crepe encloses an internal volume comprising a first sauce component, characterised in that, said internal volume further comprises an edible barrier layer enclosing a sub-volume, wherein said sub-volume comprises a further sauce component which differs in composition from said first sauce component.

### Detailed description of the invention.

A crepe is readily recognised by a person skilled in this area of food technology. Typically a crepe will comprise about 50 parts by weight (p/wt) of water, 15 to 30 p/wt of flour, 7 to 20 p/wt of egg, 0.5 to about 3 p/wt sunflower oil, 0 to 5 p/wt of corn starch, 5 to 15 p/wt milk powder and 0 to 0.3 p/wt salt.

The product of the invention allows the combination of a plurality of different sauce flavours or textures within a single folded filled crepe. The edible barrier layer between the sauce components prevents the different sauces from mixing when the product is reheated for consumption. In this way one or more sub-volumes may be defined within the product wherein said sub-volumes comprise one or more further sauce components which differ in composition from said first sauce component. When the product is then cut into by the consumer on consumption the appearance of a multi-layered product is generated wherein different sauce layers are separated by edible barrier layers within the crepe product.

The edible barrier may be selected from any suitable food material which is capable of preventing the different sauce components from mixing during the re-heating of the product for consumption. This may comprise a slice of meat such as ham or a vegetable material. Preferably the edible barrier that defines a one or more subvolumes within the filled crepe product is a further crepe layer.

The sauces which can be combined in a product of the invention can be any suitable filling that could be vegetable, meat, dairy based as well as a confection material. Preferably one of the sauces used is a cheese based sauce as this provides highly desirable organoleptic properties when reheated for consumption.

It has been found that the combination of a tomato sauce and a cheese sauce, separated by an edible barrier provides an excellent contrast of flavour and texture to a filled crepe. Therefore a preferred embodiment of the invention comprises a food product as described above wherein the first sauce component comprises a tomato flavoured sauce and the further sauce component comprises a cheese flavoured sauce.

The external surface of a food product provided by the invention suitably comprises a coating. Preferably said coating is of batter and/or bread crumbs.

In a most preferred embodiment of the invention the food product described herein is frozen, preferably at less than -18°C.

In a second object the present invention provides a process for preparing a food product wherein said process comprises the steps:
(i) dosing a layer of a first sauce component onto a crepe;
(ii) placing an edible barrier layer over said first sauce component to separate it from a layer of a further sauce component which is dosed thereon;
(iii) folding said crepe and sealing to contain the sauce components;
(iv) freezing;
wherein said further sauce component differs in composition from said first sauce component.

The dosing of sauce step (i) is preferably made onto a substantially circular crepe of a standard size, preferably a diameter of 10 to 20 cm, more preferably 12 to 14 cms. The first sauce component may be dosed in the form of a ring around the centre of the crepe such that said centre does not contain sauce. The edible barrier layer with its further sauce component can then be positioned on the first sauce component. The absence of the first sauce component from the centre of the crepe reduces leakage of the sauce during the folding a sealing step (iii).

Preferably the first sauce component is a tomato flavoured sauce and the further sauce component a cheese flavoured sauce.

The edible barrier layer is also preferably circular and has a smaller diameter than that of the crepe used in step (i) preferably from 5 to 15 cm, more preferably 8 to 10 cm. This ensures that when the product is folded and sealed the sub-volume defined by the edible barrier will be surrounded by the first sauce component.

The edible barrier layer may be folded and sealed to contain said further sauce component and placed over said first sauce component in a replacement to step (ii). Alternatively the edible barrier layer may be positioned on the product of step (i) prior to or after being dosed with a further sauce component and then subsequently folded in step (iii).

Preferably said edible barrier layer is a slice of meat, more preferably said edible barrier is also a crepe thus providing a multi-crepe layered product with a combination of different sauce flavours.

Sealing is suitably achieved by pressing together the open edge of the crepe layer of step (i) when folded, however a wash such as an egg based wash may be used to facilitate sealing of the crepe.

Once folded and sealed the product may be covered in batter and/or bread crumbs before freezing at to about -18°C. Freezing may be achieved by any suitable freezing means.

### Examples

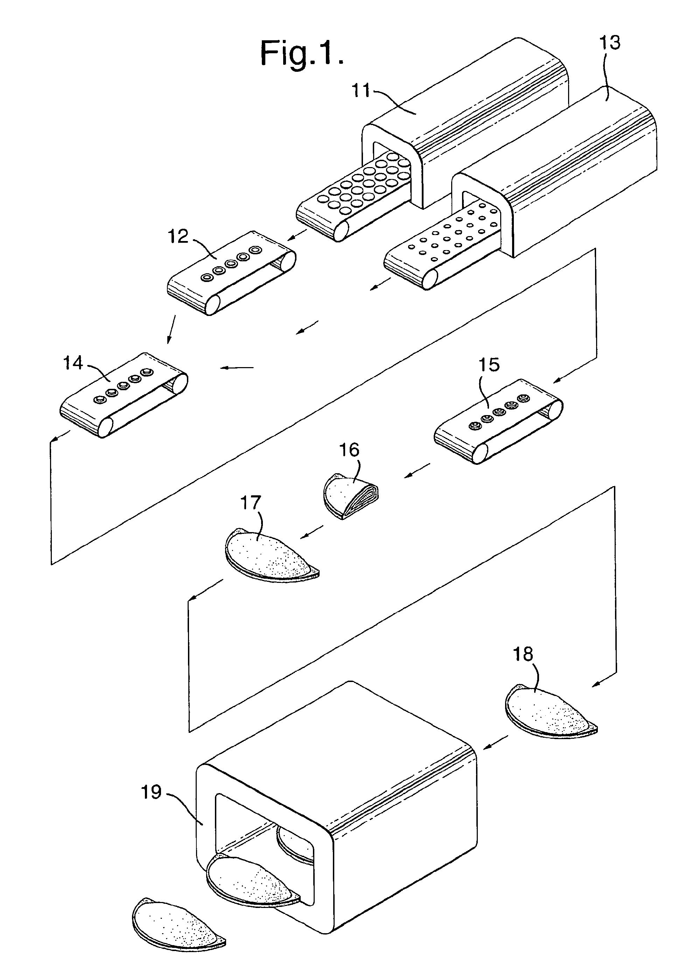

Figures 1,2 and 3 illustrate alternative routes by which the process of the invention may be undertaken. Reference to these figures will be made in the subsequent examples.

### Example 1

Ingredients according to table 1 were mixed to a smooth crepe batter.

As illustrated in figure 1, two different volumes of this mixture were then dosed onto two different plate conveyors, a larger volume to provide the outer crepe (11) and a smaller volume to provide the edible barrier layer in the form of smaller crepes (13). These volumes were then passed through an oven wherein the plate was heated from beneath.

A first tomato sauce with ingredients indicated in table 2 was dosed onto the larger crepe (12). The smaller crepes were then picked from the second conveyor and placed onto the first sauce layer (14).

A further cheese flavoured sauce according to table 3 was then dosed onto the smaller crepe (15) and the product was folded and sealed at the edge to obtain a semi-circular shape (16). This was then battered (17) and breaded (18) before freezing to -18°C.

**Table 1**

| Ingredient | Parts by weight |
|---|---|
| Soft wheat flour | 18.5 |
| Milk powder | 12.5 |
| Nutmeg | 0.0025 |
| Whole egg | 18 |
| Vegetable oil | 0.7 |
| Salt | 0.3 |
| Water | 50 |

**Table 2.**

| Ingredient | Parts by weight |
|---|---|
| Tomato | 64.8 |
| Water | 20 |
| Onion | 5 |
| Garlic | 1 |
| Vegetable oil | 5 |
| Oregano | 0.5 |
| Salt | 1.2 |
| Soft wheat starch | 2.5 |

Wherein the yield after cooking was 90%.

**Table 3.**

| Ingredient | Parts by weight |
|---|---|
| Bechamel sauce (roux milk nutmeg salt starch) | 40 |
| Edamer cheese | 3 |
| Gruyere cheese | 7 |
| Mozzarella | 50 |

### Example 2

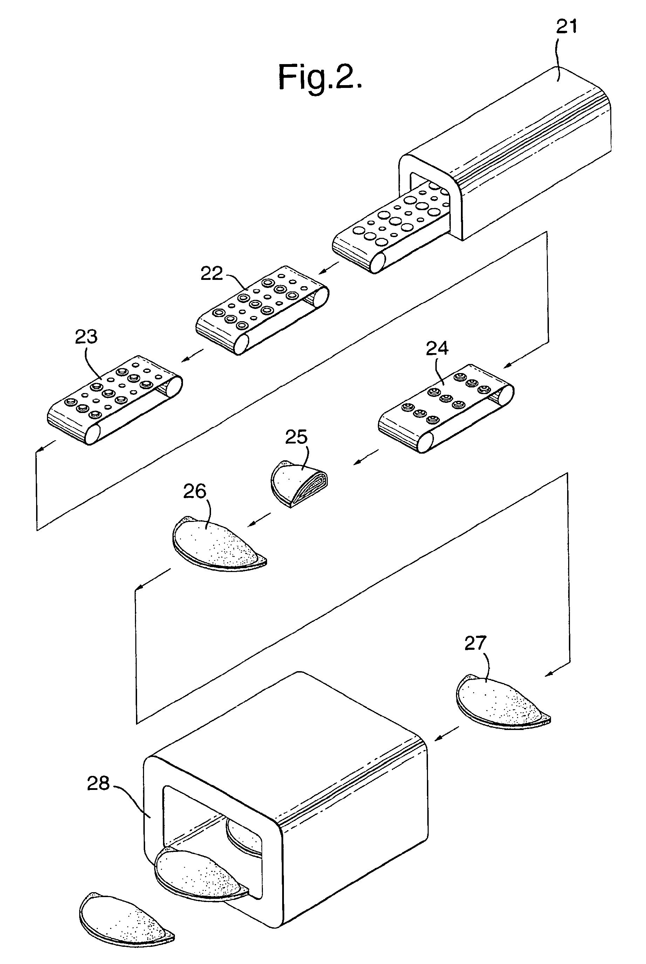

Crepe mixture according to example 1 was dosed in two different volumes (Figure 2) and cooked on a single plate conveyor (21) to form crepes of two sizes. In a subsequent step a first sauce was dosed onto the crepe from the larger volume of mixture (22). Smaller crepes were then picked an placed onto the layer of first sauce (23). A further sauce component was then dosed onto the smaller crepe (24) and the layered intermediate folded and sealed at the edge (25) before the steps of battering (26) breading (27) and freezing to less than -18°C (28).

### Example 3

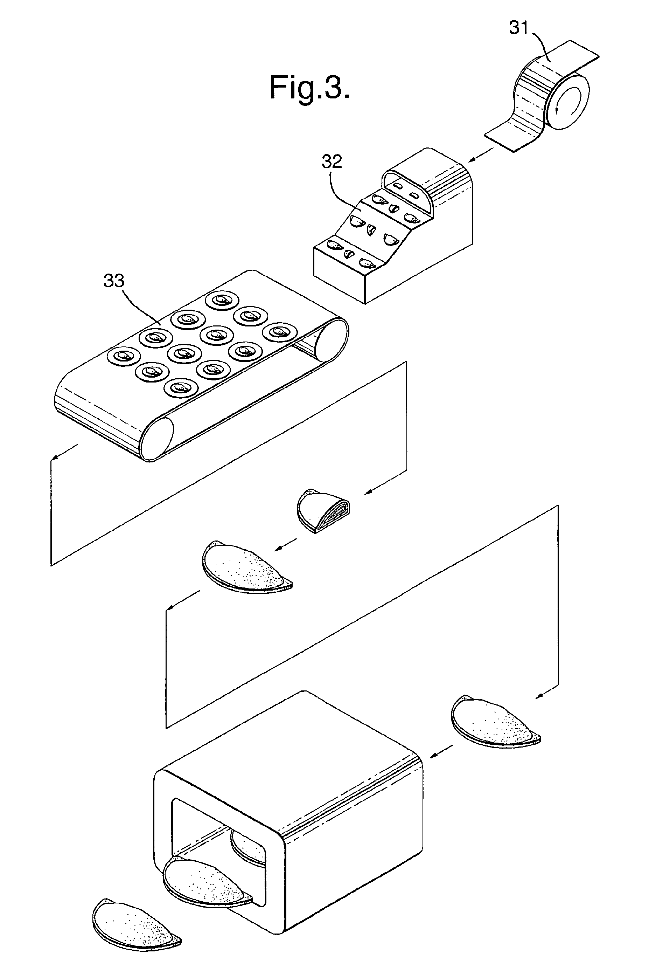

Crepes were dosed with a first sauce component as described in previous examples (Figure 3). Separately a continuous crepe sheet was fed into a filled pasta machine (31) wherein the crepe sheet was cut and filled with a further sauce component (32). The sealed crepe / sauce component from the filled pasta machine was then picked and placed on the first sauce component (33). Folding, sealing and subsequent steps followed as previously described.

## Claims

1. A frozen food product comprising a crepe, wherein said crepe encloses an internal volume comprising a first sauce component, **characterised in that** said internal volume further comprises an edible barrier layer enclosing a sub-volume and wherein said sub-volume comprises a further sauce component which differs in composition from said first sauce component.

2. A frozen food product according to claim 1, wherein said first sauce component comprises a tomato flavoured sauce and the further sauce component comprises a cheese flavoured sauce.

3. A frozen food product according to either claim 1 or claim 2 wherein said edible barrier layer comprises a crepe.

4. A frozen food product according to either claim 1 or claim 2 wherein said edible barrier layer comprises a slice of meat.

5. A frozen food product according to any one of the preceding claims wherein said product comprises a batter coating.

6. A process for preparing a frozen food product wherein said process comprises the steps:
(i) dosing a layer of a first sauce component onto a crepe;
(ii) placing an edible barrier layer over said first sauce component to separate it from a layer of a further sauce component which is dosed thereon;
(iii) folding said crepe and sealing to contain the sauce components;
(iv) freezing;
wherein said further sauce component differs in composition from said first sauce component.

7. A process according to claim 6, wherein said edible barrier layer comprises a slice of meat.

8. A process according to claim 6, wherein said edible barrier layer comprises a further crepe.

9. A process according to claim 8, wherein said further crepe layer dosed with said further sauce component is folded, sealed and subsequently placed over said first sauce component in a replacement to step (ii).

10. A process according to any one of claims 6 to 9 wherein a batter coating is added to product of step (iii).

## Patentansprüche

1. Gefrorenes, einen Pfannkuchen umfassendes Nahrungsmittelprodukt, wobei der Pfannkuchen ein Innenvolumen einschließt, das eine erste Saucen-Komponente aufweist, **dadurch gekennzeichnet, dass** das Innenvolumen weiters eine essbare Barriere-Schicht umfasst, die ein Unter-Volumen einschließt, und wobei das Unter-Volumen eine weitere Saucen-Komponente aufweist, die sich in ihrer Zusammensetzung von der ersten Saucen-Komponente unterscheidet.

2. Gefrorenes Nahrungsmittelprodukt nach Anspruch 1, wobei die erste Saucen-Komponente eine Sauce mit Tomaten-Geschmack und die weitere Saucen-Komponente eine Sauce mit Käse-Geschmack umfasst.

3. Gefrorenes Nahrungsmittelprodukt nach Anspruch 1 oder 2, wobei die essbare Barriere-Schicht einen Pfannkuchen umfasst.

4. Gefrorenes Nahrungsmittelprodukt nach Anspruch 1 oder 2, wobei die essbare Barriere-Schicht eine Schnitte Fleisch umfasst.

5. Gefrorenes Nahrungsmittelprodukt nach einem der vorhergehenden Ansprüche, wobei das Produkt einen Backteig-Überzug aufweist.

6. Verfahren zur Herstellung eines gefrorenen Nahrungsmittelprodukts, wobei das Verfahren die Schritte aufweist:
(i) Dosieren einer Schicht einer ersten Saucen-Komponente auf einem Pfannkuchen;
(ii) Platzieren einer essbaren Barriere-Schicht auf der ersten Saucen-Komponente, um sie von einer Schicht einer weiteren Saucen-Komponente, die darauf dosiert wird, zu trennen;
(iii) Falten des Pfannkuchens und dichtendes Verschließen, damit er die Saucen-Komponenten enthält;
(iv) Gefrieren;
wobei sich die weitere Saucen-Komponente hinsichtlich ihrer Zusammensetzung von der ersten Saucen-Komponente unterscheidet.

7. Verfahren nach Anspruch 6, wobei die essbare Barriere-Schicht eine Schnitte Fleisch umfasst.

8. Verfahren nach Anspruch 6, wobei die essbare Barriere-Schicht einen weiteren Pfannkuchen umfasst.

9. Verfahren nach Anspruch 8, wobei die weitere Pfannkuchen-Schicht, auf die die weitere Saucen-Komponente dosiert ist, gefaltet, dicht verschlossen und danach als Ersatz für Schritt (ii) über der ersten Saucen-Komponente platziert wird.

10. Verfahren nach einem der Ansprüche 6 bis 9, wobei ein Backteig-Überzug zum Produkt aus Schritt (iii) hinzugefügt wird.

## Revendications

1. Produit alimentaire congelé comprenant une crêpe, dans lequel ladite crêpe renferme un volume interne comprenant un premier composant de sauce, **caractérisé en ce que** ledit volume interne comprend en outre une couche barrière comestible renfermant un sous-volume et dans lequel ledit sous-volume comprend un composant de sauce supplémentaire qui est de composition différente dudit premier composant de sauce.

2. Produit alimentaire congelé selon la revendication 1, dans lequel ledit premier composant de sauce comprend une sauce aromatisée à la tomate et le composant de sauce supplémentaire comprend une sauce aromatisée au fromage.

3. Produit alimentaire congelé selon soit la revendication 1, soit la revendication 2, dans lequel ladite couche barrière comestible comprend une crêpe.

4. Produit alimentaire congelé selon soit la revendication 1, soit la revendication 2, dans lequel ladite couche barrière comestible comprend une tranche de viande.

5. Produit alimentaire congelé selon l'une quelconque des revendications précédentes, dans lequel ledit produit comprend une couche de pâte.

6. Procédé de préparation d'un produit alimentaire congelé, dans lequel ledit procédé comprend les étapes consistant à :
(i) doser une couche d'un premier composant de sauce sur une crêpe ;
(ii) placer une couche barrière comestible sur ledit premier composant de sauce pour le séparer d'une couche d'un composant de sauce supplémentaire qui est dosé sur celle-ci ;
(iii) plier ladite crêpe et la sceller pour contenir les composants de sauce ;
(iv) congeler ;
dans lequel ledit composant de sauce supplémentaire a une composition différente dudit premier composant de sauce.

7. Procédé selon la revendication 6, dans lequel ladite couche barrière comestible comprend une tranche de viande.

8. Procédé selon la revendication 6, dans lequel ladite couche barrière comestible comprend une crêpe supplémentaire.

9. Procédé selon la revendication 8, dans lequel ladite couche de crêpe supplémentaire ayant reçu une dose dudit composant de sauce supplémentaire est pliée, scellée et par la suite placée sur ledit premier composant de sauce en remplacement de l'étape (ii).

10. Procédé selon l'une quelconque des revendications 6 à 9, dans lequel une couche de pâte est ajoutée au produit de l'étape (iii).
